**Europäisches Patentamt**

**European Patent Office**

**Office européen des brevets**

(19)

(11) Veröffentlichungsnummer: **0 334 973 B1**

(12) # EUROPÄISCHE PATENTSCHRIFT

(45) Veröffentlichungstag der Patentschrift: **23.12.92**

(21) Anmeldenummer: **88104899.5**

(22) Anmeldetag: **26.03.88**

(51) Int. Cl.⁵: **H01R 13/74**, H02B 1/04, H01R 9/26

(54) **Mehrpoliger elektrischer Steckverbinder.**

(43) Veröffentlichungstag der Anmeldung:
**04.10.89 Patentblatt 89/40**

(45) Bekanntmachung des Hinweises auf die
Patenterteilung:
**23.12.92 Patentblatt 92/52**

(84) Benannte Vertragsstaaten:
**DE**

(56) Entgegenhaltungen:
**EP-A- 0 190 373**
**DE-A- 2 830 362**
**DE-U- 8 231 090**
**FR-A- 2 513 007**

(73) Patentinhaber: **Weidmüller Interface GmbH & Co.**
**Paderborner Strasse 175**
**W-4930 Detmold(DE)**

(72) Erfinder: **Martenczuk, Liselotte**
**Altstadt 17**
**W-6110 Diburg(DE)**
Erfinder: **Scheffner, Wolfgang**
**Saalfeldener Strasse 54**
**W-6074 Roedermark(DE)**

(74) Vertreter: **Stracke, Alexander, Dipl.-Ing. et al**
**Jöllenbecker Strasse 164**
**W-4800 Bielefeld 1(DE)**

EP 0 334 973 B1

## Beschreibung

Die Erfindung betrifft einen mehrpoligen elektrischen Steckverbinder mit einem für die Befestigung an Wanddurchführungen eingerichteten Verbinderteil und einem rückwärtig daran angeordneten Anschlußverteiler, wobei der Steckverbinder auch auf einer Tragschiene befestigbar ist.

Mehrpolige elektrische Steckverbinder für die Befestigung an Wanddurchführungen eines Gehäuses, beispielsweise eines Schaltschrankes oder dergleichen, mit einem entsprechend eingerichteten Verbinderteil und einem rückwärtig daran angeordneten Anschlußverteiler sind in verschiedenen Ausführungen bekannt (DE-GM 82 31 090, DE-36 20 719 A1). Es besteht in der Praxis nun oft das Bedürfnis, einen derartigen, für die Befestigung an Wanddurchführungen ausgelegten mehrpoligen Steckverbinder im Bedarfsfall auch einmal auf Tragschienen beispielsweise im Inneren eines Schaltschrankes zu befestigen. Dies hat in der Praxis dazu geführt, daß man an dem rückwärtigen Anschlußverteiler in seiner Rückwand Aufnahmen zum Einstecken spezieller Rastelemente gebildet hat, die ihrerseits dann darauf ausgelegt sind, mittels Rastfüßen auf die Tragschienen aufgesetzt zu werden. Dem Wesen nach handelt es sich insoweit also um Aufrastadapter, wie sie beispielsweise auch im Zusammenhang mit anderen reihenklemmenartigen Bauteilen aus der DE-2830 362 A1 bekannt geworden sind.

Problemhaft ist dabei, daß bei den bekannten mehrpoligen elektrischen Steckverbindern mit Aufrastmöglichkeit auf eine Tragschiene die gesamten, teilweise hohen Betätigungskräfte direkt über den Anschlußverteiler gehen und damit die elektrischen Verbindungsstellen zwischen dem Anschlußverteiler und dem Verbinderteil, aber auch die mechanischen Verrastungen zwischen den Einzelscheiben, aus denen der Anschlußverteiler üblicherweise aufgebaut ist, und dem Gehäuse des Verbinderteiles belasten.

Problemhaft ist außerdem, daß einerseits die Befestigung des Steckverbinders auf der Tragschiene stabil sein muß, da bei derartigen mehrpoligen Steckverbindern hohe Steck-und Ziehkräfte auftreten können und aufzunehmen sind, andererseits aber die aufzubringende Kraft für das Aufrasten auf der Tragschiene noch beherrschbar bleiben muß. Bislang hat man hier insoweit immer einen im Ergebnis nicht immer befriedigenden Kompromiß in Kauf nehmen müssen.

Der vorliegenden Erfindung liegt die Aufgabe zugrunde, einen mehrpoligen elektrischen Steckverbinder der gattungsgemäßen Art zu schaffen, der im Fall seiner Anordnung auf einer Tragschiene hohe Betätigungskräfte ohne Belastung der insoweit kritischen Zone zwischen dem Anschlußverteiler und dem Verbindungsteil aufnehmen kann.

Die erfindungsgemäße Lösung besteht darin, daß zur Anordnung auf einer Tragschiene Befestigungsböcke mit einem zur Tragschiene passenden Fußbereich an den Schmalseiten des Verbinderteiles befestigt sind. Dank dieser Ausgestaltung gehen die Belastungskräfte direkt über das Verbindergehäuse und die Befestigungsböcke zur Tragschiene und belasten insbesondere nicht mehr den kritischen elektrischen und mechanischen Verbindungsbereich zwischen dem Anschlußverteiler und dem Verbinderteil. Basierend auf diesem Konstruktionsprinzip ist ferner in bevorzugter weiterer Ausgestaltung vorgesehen, daß die Befestigungsböcke in ihrem Fußbereich elastisch spreizbare Rastfüße zum Aufrasten auf die Tragschiene haben und den Rastfüßen eine Klemmschraube zur Fixierung in der aufgerasteten Stellung zugeordnet ist. Auf diese Weise lassen sich somit nunmehr sehr hohe Betätigungskräfte problemlos unter Umgehung der kritischen Zone übertragen, und zwar unter Beibehalt einer leichtgängigen Aufrastung des Steckverbinders auf die Tragschiene. Das Aufrasten geschieht leichtgängig bei geöffneter Klemmschraube, danach werden mittels der Klemmschraube die Rastfüße der Befestigungsböcke auf der Tragschiene fest verspannt. Zum Abnehmen des Steckverbinders von der Tragschiene genügt das Lösen der Klemmschraube.

Da bei Befestigung des Steckverbinders auf der Tragschiene das bei der Festlegung in einem Wanddurchbruch übliche untere metallische Sockelteil, mit dem die Festlegung im Wanddurchbruch erfolgt, fehlt und damit in diesem Anwendungsfall auf der Tragschiene die sonst übliche Zugentlastung in Verbindung mit diesem Sockelteil fehlt, sind ferner in zweckmäßiger weiterer Ausgestaltung an den Befestigungsböcken noch in Steckrichtung des Verbinderteiles vorstehende Verriegelungselemente für die Zugentlastung befestigt, die dann mit entsprechenden Elementen am Gehäuse des einzufügenden weiteren Steckverbinderelementes zusammenwirken können.

Ein Ausführungsbeispiel eines mehrpoligen elektrischen Steckverbinders gemäß der Erfindung wird nachstehend unter Bezugnahme auf die Zeichnung näher beschrieben. Es zeigen:

Figur 1 einen mehrpoligen elektrischen Steckverbinder gemäß der Erfindung in Frontansicht,

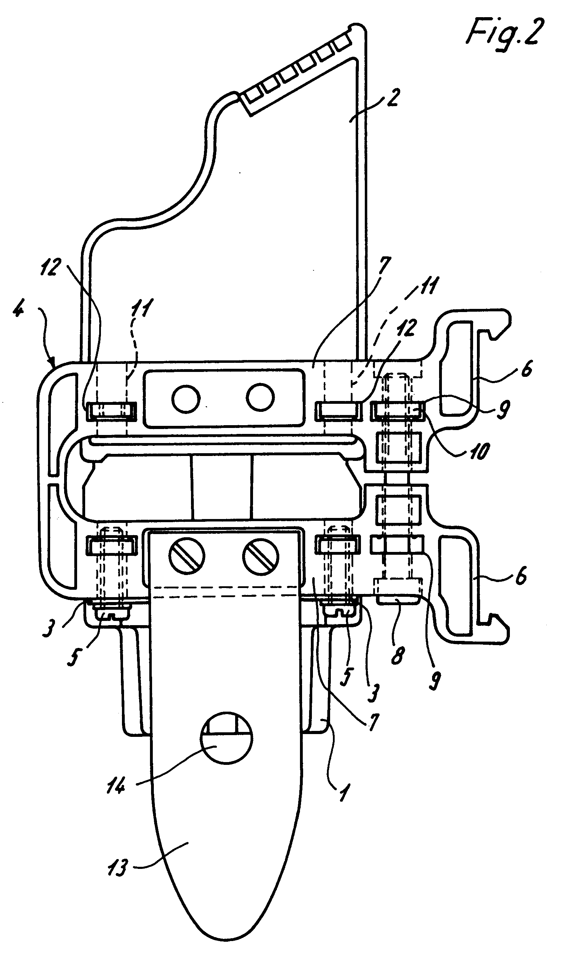

Figur 2 den Steckverbinder nach Figur 1 in Seitenansicht.

Der dargestellte mehrpolige elektrische Steckverbinder beinhaltet ein Verbinderteil 1, an dem rückwärtig ein Anschlußverteiler 2 angeordnet ist, der üblicherweise aus einzelnen Scheiben aufgebaut ist, die mit dem Verbinderteil 1 einerseits elektrisch und über die Gehäuse auch mechanisch verbunden sind. Der Steckverbinder ist dabei für die Befestigung an Wanddurchführungen eingerichtet, wozu an dem Verbinderteil 1 in den Ecken jeweils Schraubflansche 3 vorgesehen sind, mit deren Hilfe das Verbinderteil mit dem rückwärtigen Anschlußteil an Gegenlagern im Bereich der Wanddurchführung oder an Gegenlagern eines in der Wanddurchführung befestigten Sockelteiles angeschraubt werden kann.

Soll der mehrpolige elektrische Steckverbinder nun im Bedarfsfall auch einmal auf einer Tragschiene im Inneren beispielsweise eines Schaltschrankes angeordnet werden, werden erfindungsgemäß an den Schmalseiten der Verbinderteiles 1 Befestigungsböcke 4, die einen zur Tragschiene passenden Fußbereich haben, befestigt. Zweckmäßig werden hierzu die vorhandenen Schraubflansche 3 benutzt, auf denen die Befestigungsböcke 4 mittels Schrauben 5 festgeschraubt werden. Es ergibt sich eine starre kraftmäßig hochbelastbare Verbindung direkt zwischen dem Gehäuse des Verbinderteiles 1 und den Befestigungsböcken 4 unter kraftmäßiger Umgehung der bezüglich der Betätigungsbelastungen kritischen elektrischen und mechanischen Verbindungszone zwischen dem Verbinderteil 1 und dem Anschlußverteiler 2.

Die Befestigungsböcke 4 sind des weiteren so ausgestaltet, daß sie zwar einerseits leichtgängig auf die Tragschiene aufgerastet werden können, andererseits aber im Sinne der Übertragung hoher Betätigungskräfte auf dieser fest verankert werden können. Hierzu sind sie mit elastisch spreizbaren Rastfüßen 6 versehen, die dadurch gebildet sind, daß die Befestigungsböcke 4 in Art von Federbügeln ausgestaltet sind, wobei an den freien Enden der elastisch federnden Bügelschenkel 7 die Rastfüße 6 angeformt sind. Zur Fixierung der auf eine Tragschiene aufgerasteten Rastfüße 6 durchtritt die beiden Bügelschenkel 7 in der Nähe der Rastfüße 6 eine Klemmschraube 8 für die in einem der Schenkel 7 in einem von außen zugänglichen Aufnahmeschlitz 9 eine Mutter 10 angeordnet ist. Die beiden Bügelschenkel 7 haben insoweit eine identische Ausgestaltung bezüglich der Aufnahmen für die Klemmschraube 8 und der Aufnahmeschlitze 9 für eine Mutter 10, damit identisch ausgebildete Befestigungsböcke 4 sowohl als rechter Bock wie als linker Bock an einem Verbinderteil 1 befestigt werden können.

In diesem Sinn befinden sich ferner in den beiden Bügelschenkeln 7 auch Durchtrittsbohrungen 11 und Aufnahmeschlitze 12 zum Durchtritt der Schrauben 5 und die Aufnahme entsprechender Muttern für diese Schrauben 5, mit denen die Befestigung auf den Schraubflanschen 3 des Verbinderteiles 1 erfolgt.

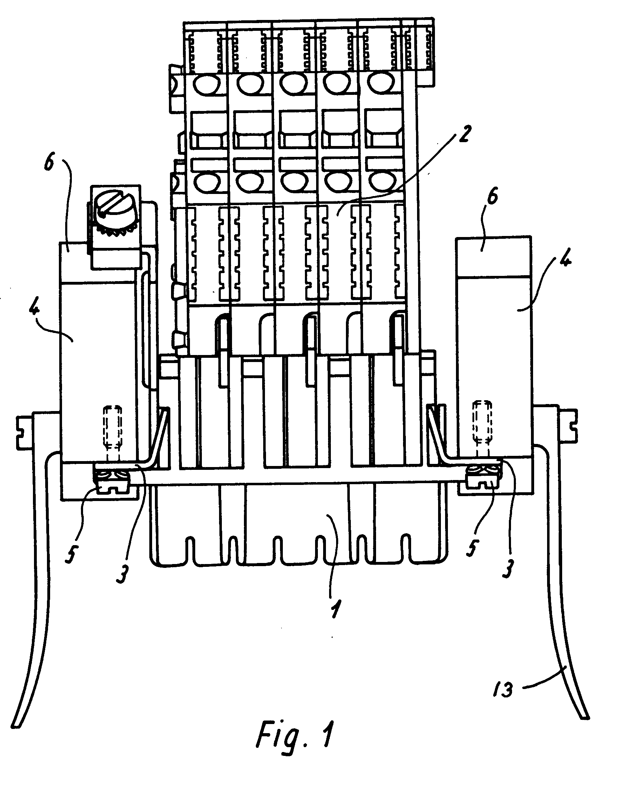

An den Befestigungsböcken 4 sind ferner in Steckrichtung des Verbinderteiles 1 vorstehend Verriegelungselemente für eine Zugentlastung befestigt. Im dargestellten Ausführungsbeispiel sind hierzu mit dem entsprechenden Bügelschenkel 7 jeweils elastische Flügel 13 verschraubt, die an ihren freien Enden leicht nach außen gekrümmt verlaufen (siehe Figur 1) und die ferner ein Rastloch 14 aufweisen. Wird beim Tätigen der Steckverbindung ein weiteres Verbinderteil (nicht dargestellt) mit dem Verbinderteil 1 zusammengesteckt, können die elastischen Flügel 13 mit ihren Rastlöchern 14 auf am Gehäuse des weiteren Verbinderteiles vorgesehene Rastzapfen aufschnappen. Soll die Steckverbindung wieder gelöst werden, kann diese der Zugentlastung dienende Rastverbindung durch leichtes Nachaußenbiegen der elastischen Flügel 13 problemlos wieder gelöst werden.

**Patentansprüche**

1. Mehrpoliger elektrischer Steckverbinder mit einem für die Befestigung an Wanddurchführungen eingerichteten Verbinderteil (1) und einem rückwärtig daran angeordneten Anschlußverteiler (2), wobei der Steckverbinder auch auf einer Tragschiene befestigbar ist, **dadurch gekennzeichnet**, daß zur Anordnung auf einer Tragschiene Befestigungsböcke (4) mit jeweils zur Tragschiene passendem Fußbereich (6) an den Schmalseiten des Verbinderteiles (1) befestigt sind.

2. Steckverbinder nach Anspruch 1, dadurch gekennzeichnet, daß die Befestigungsböcke (4) in ihren Fußbereichen elastisch spreizbare Rastfüße (6) zum Aufrasten auf die Tragschiene haben und den Befestigungsböcken (4) eine Klemmschraube (8) zur Fixierung der Rastfüße (6) auf der Tragschiene zugeordnet ist.

3. Steckverbinder nach Anspruch 1 oder 2, dadurch gekennzeichnet, daß die Befestigungsböcke (4) in Art elastischer Federbügel ausgebildet sind und jeweils zwei elastisch federnde Bügelschenkel (7) aufweisen, an deren freien Enden die Rastfüße (6) angeformt sind.

4. Steckverbinder nach den Ansprüchen 2 und 3, dadurch gekennzeichnet, daß die beiden Bügelschenkel (7) eines Befestigungsbockes (4) jeweils in beiden Schenkeln eine Aufnahme für die Klemmschraube (8) sowie Aufnahmeschlitze (9) haben, in denen eine Mutter (10) für die Klemmschraube (8) angeordnet ist.

5. Steckverbinder nach einem der vorhergehenden Ansprüche, dadurch gekennzeichnet, daß die Befestigungsböcke (4) an den für die Wanddurchführungsfestlegung vorgesehenen Schraubflanschen (3) des Verbinderteiles (1) festgeschraubt sind.

6. Steckverbinder nach Anspruch 5, dadurch gekennzeichnet, daß in beiden Bügelschenkeln (7) eines Befestigungsbockes (4) jeweils Aufnahmen (11) für die Befestigungsschrauben (5) sowie Aufnahmeschlitze (12) vorgesehen sind, in denen Muttern für die Befestigungsschrauben (5) angeordnet sind.

7. Steckverbinder nach einem der vorhergehenden Ansprüche, dadurch gekennzeichnet, daß an den Befestigungsböcken (4) in Steckrichtung des Verbinderteiles (1) vorstehend Verriegelungselemente (13) für die Zugentlastung befestigt sind.

8. Steckverbinder nach Anspruch 7, dadurch gekennzeichnet, daß die Verriegelungselemente als elastische Flügel (13) ausgebildet sind, die ein Rastloch (14) aufweisen.

9. Steckverbinder nach Anspruch 8, dadurch gekennzeichnet, daß die elastischen Flügel (13) an ihren freien Enden leicht nach außen gedrückt sind.

## Claims

1. Multipolar electrical plug connection including a connector portion (1) designed for being attached to wall entrances and a distribution board (2) arranged at the rear thereof, the plug connection being also attachable to a bearing rail, **characterized in that** clamping stands (4), having bottom areas (6) adapted to the respective bearing rail, are attached to the narrow sides of the connector portion (1) for being mounted onto a bearing rail.

2. A plug connection as claimed in claim 1, characterized in that the clamping stands (4) have in their bottom areas flexibly spreadable notched feet (6) for being snapped onto the bearing rail and that a clamp bolt (8) is assigned to the clamping stands (4) for locking the notched feet (6) in position on the bearing rail.

3. A plug connection as claimed in claim 1 or 2, characterized in that the clamping stands (4) are shaped as a sort of elastic spring clips and comprise two elastically resilient clip arms (7) each on the free ends of which are formed the notched feet (6).

4. A plug connection as claimed in claims 2 and 3, characterized in that each of the two clip arms (7) of a clamping stand (4) has in both arms a seating for the clamp bolt (8) as well as receiving slots (9) in which is located a nut (10) for the clamp bolt (8).

5. A plug connection as claimed in any of the preceding claims, characterized in that the clamping stands (4) are bolted to the bolt flanges (3) of the connector portion (1) provided for the determination of the wall entrance.

6. A plug connection as claimed in claim 5, characterized in that in both clip arms (7) of each clamping stand (4) are provided seatings (11) for the clamping bolts (5) as well as receiving slots (12) in which are located nuts for the clamping bolts (5).

7. A plug connection as claimed in any of the preceding claims, characterized in that locking mechanisms (13) for traction relief are attached to the clamping stands (4) projecting in the direction of plugging of the connector portion (1).

8. A plug connection as claimed in claim 7, characterized in that the locking mechanisms are designed in the form of elastic wings (13) that possess a notched hole (14).

9. A plug connection as claimed in claim 8, characterized in that the elastic wings (13) are bended slightly outwardly on their free ends.

## Revendications

1. Connecteur électrique multibroches comprenant un élément de raccord (1) conçu pour être fixé à des traversées murales et un répartiteur à branchements (2) disposé à l'arrière de celui-ci, le connecteur pouvant être fixé également sur un profilé support, **caractérisé en ce que** des chevalets de fixation (4), ayant des zones inférieures (6) appropriées au profilé support respectif, sont fixés aux chants de l'élément de raccord (1) pour être placés sur un profilé support.

2. Connecteur selon la revendication 1, caractérisé en ce que les chevalets de fixation (4) possèdent dans leurs zones inférieures des pieds à crans (6) extensibles élastiquement pour être encliquetés au profilé support et en ce qu'une vis de serrage (8) est associée aux chevalets de fixation (4) pour fixer les pieds à crans (6) sur le profilé support.

3. Connecteur selon l'une quelconque des revendications 1 ou 2, caractérisé en ce que les chevalets de fixation (4) sont formés d'une sorte d'étriers à ressorts élastiques et comprennent deux branches d'étrier (7) à suspension élastique chacun aux extrémités libres desquels sont joints les pieds à crans (6).

4. Connecteur selon les revendications 2 et 3, caractérisé en ce que chacun des deux branches d'étrier (7) d'un chevalet de fixation (4) possède dans les deux branches une surface d'appui pour la vis de serrage (8) ainsi que des fentes réceptrices (9) dans lesquelles est disposé un écrou (10) pour la vis de serrage (8).

5. Connecteur selon l'une quelconque des revendications précédentes, caractérisé en ce que les chevalets de fixation (4) sont serrés à vis aux brides à vis (3) de l'élément de raccord (1) prévues pour la détermination de la traversée murale.

6. Connecteur selon la revendication 5, caractérisé en ce que dans chacun des deux branches d'étrier (7) d'un chevalet de fixation (4) sont prévus des surfaces d'appui (11) pour les vis de fixation (5) ainsi que des fentes réceptrices (12) dans lesquelles sont disposés des écrous pour les vis de fixation (5).

7. Connecteur selon l'une quelconque des revendications précédentes, caractérisé en ce que des éléments de verrouillage (13) sont fixés aux chevalets de fixation (4) de façon saillante en direction d'enfichage de l'élément de raccord (1) pour décharger la traction.

8. Connecteur selon la revendication 7, caractérisé en ce que les éléments de verrouillage ont la forme d'ailes élastiques (13) qui présentent un trou à cran (14).

9. Connecteur selon la revendication 8, caractérisé en ce que les extrémités libres des ailes élastiques (13) sont légèrement courbées vers l'extérieur.

Fig. 1

Fig.2